# EUROPÄISCHE PATENTSCHRIFT

(11) **EP 3 029 301 B1**
(45) Veröffentlichungstag und Bekanntmachung des Hinweises auf die Patenterteilung: **10.05.2017**
(21) Anmeldenummer: 15188092.9
(22) Anmeldetag: 02.10.2015
(51) Int. Cl.: F02D 41/00, F02M 25/025, F02M 25/022, F02D 19/12

(54) **VERFAHREN UND EIN SYSTEM ZUM BETREIBEN VON WENIGSTENS EINER FUNKTIONSEINHEIT EINES KRAFTFAHRZEUGS**
METHOD AND A SYSTEM FOR OPERATING AT LEAST ONE FUNCTIONAL UNIT OF A MOTOR VEHICLE
PROCEDE ET SYSTEME DE FONCTIONNEMENT D'AU MOINS UNE UNITE FONCTIONNELLE D'UN VEHICULE AUTOMOBILE

(30) Priorität: 04.11.2014 DE 102014222471
(43) Veröffentlichungstag der Anmeldung: 08.06.2016
(73) Patentinhaber: Bayerische Motoren Werke Aktiengesellschaft, 80809 München (DE)
(72) Erfinder: BÖHM, Martin, 82343 Pöcking (DE); MAEHRLE, Werner, 85293 Reichertshausen (DE)

(56) Entgegenhaltungen:
- EP-A2- 2 789 839
- DE-A1-102006 054 226
- DE-A1-102013 202 431

## Beschreibung

Die Erfindung betrifft ein Verfahren und ein System zum Betreiben von wenigstens einer Funktionseinheit eines Kraftfahrzeugs.
Aufgeladene Verbrennungsmotoren in Form von Ottomotoren sind üblicherweise im Bereich hoher Lasten stark klopfbegrenzt. Um ein Klopfen des Verbrennungsmotors zu verhindern, kann ein Zündwinkel von seinem für den Betrieb des Verbrennungsmotors optimalen Wert nach "Spät" verschoben werden. Hierdurch verschlechtert sich jedoch der Wirkungsgrad der in dem Verbrennungsmotor erfolgenden Verbrennung. Dadurch erhöht sich der Kraftstoffverbrauch des Verbrennungsmotors, was mit einer erhöhten Schadstoffemission einhergeht. Zudem verringert sich die Leistung des Verbrennungsmotors und es muss der Luftmassendurchsatz erhöht werden, um ein gewünschtes Drehmoment halten zu können. Hierdurch entsteht ein erhöhter Kühlleistungsbedarf. Des Weiteren steigt die Abgastemperatur an, so dass zum Schutz von Bauteilen im Abgassystem eines Kraftfahrzeugs eventuell eine Anfettung erfolgen muss. (Siehe z.B. Patentschrift DE 102006054226) Durch eine Einspritzung eines Kühlfluids, beispielsweise in Form einer Emulsion, in eine dem Verbrennungsmotor vorgeschaltete Sauganlage kann eine Zylinderladung in einem Brennraum des Verbrennungsmotors gekühlt werden, wodurch die Klopfneigung des Verbrennungsmotors verringerbar ist. Ein Zündwinkel kann dann in Richtung "Früh" verstellt werden, wodurch der Kraftstoffverbrauch und die damit einhergehenden Schadstoffemissionen verringert werden. Die Leistung des Verbrennungsmotors wird gesteigert und die Abgastemperatur reduziert.

Das zum Einspritzen in die Brennräume eines Verbrennungsmotors verwendete Kühlfluid kann in einem Tank an einem Kraftfahrzeug bevorratet werden. Der Tank kann über eine Fluidleitung mit einer Klimaanlage des Kraftfahrzeugs verbunden sein, wobei über die Fluidleitung an einem Verdampfer der Klimaanlage kondensiertes Wasser als Kühlfluid dem Tank zugeführt werden kann.

Aufgabe der Erfindung ist es, den Aufwand zum Kühlen von Zylinderladungen in Brennräumen eines Verbrennungsmotors und somit zum Betreiben eines entsprechend ausgestatteten Kraftfahrzeugs zu reduzieren.

Diese Aufgabe wird durch die unabhängigen Ansprüche gelöst. Vorteilhafte Ausgestaltungen sind insbesondere in den abhängigen Ansprüchen wiedergegeben, die jeweils für sich genommen oder in unterschiedlicher Kombination miteinander einen Aspekt der Erfindung darstellen können.

Nach dem erfindungsgemäßen Verfahren zum Betreiben von wenigstens einer Funktionseinheit eines Kraftfahrzeugs wird
- ein Füllstand in einem Tank zum Bevorraten von Wasser, das wenigstens einem Brennraum eines Verbrennungsmotors des Kraftfahrzeugs zur Kühlung einer darin befindlichen Zylinderladung zuführbar ist, überwacht,
- der während der Überwachung des Füllstands in dem Tank jeweilig erfasste Füllstand mit einem vorgegebenen minimalen Füllstandgrenzwert verglichen, wobei, wenn aus dem jeweiligen Vergleich folgt, dass der jeweilig erfasste Füllstand den vorgegebenen minimalen Füllstandgrenzwert unterschreitet,
- ein momentaner Massenstrom einer einen Verdampfer einer über wenigstens eine Fluidzuleitung mit dem Tank verbundenen Klimaanlage des Kraftfahrzeugs umströmenden Luft ermittelt wird, wobei über die Fluidzuleitung ein an dem Verdampfer kondensiertes Wasser dem Tank zugeleitet wird,
- ein momentaner Feuchtegehalt der den Verdampfer umströmenden Luft ermittelt wird,
- ein momentaner Massenstrom des dem Brennraum zuzuführenden Wassers ermittelt wird,
- ein theoretischer Füllstand in dem Tank aus dem jeweilig ermittelten momentanen Massenstrom der Luft, dem jeweilig ermittelten momentanen Feuchtegehalt der Luft und dem jeweilig ermittelten momentanen Massenstrom des Wassers modelliert wird, und
- die Funktionseinheit in Abhängigkeit des jeweilig modellierten theoretischen Füllstands und/oder eines jeweiligen Gradienten des modellierten theoretischen Füllstands betrieben wird.

Erfindungsgemäß wird ein theoretischer Füllstand in dem Tank modelliert, wenn der jeweilig erfasste Füllstand in dem Tank den vorgegebenen minimalen Füllstandgrenzwert unterschreitet. Herkömmlich kann lediglich erfasst werden, dass der jeweilig erfasste Füllstand in dem Tank den vorgegebenen minimalen Füllstandgrenzwert unterschreitet. Aufgrund eines meist sehr begrenzten Bauraums wird hierzu herkömmlich ein Füllstandssensor, auch "Einpunkt-Sensor" genannt, eingesetzt, der den Füllstand in dem Tank nur an einer bestimmten Füllhöhe erfassen kann und der auch im Rahmen der Erfindung eisetzbar ist. Mit einem solchen Füllstandssensor ist somit ein Vorhandensein eines Restvolumens an Wasser in dem Tank erfassbar. Ein solcher Füllstandssensor kann keine Aussage über den tatsächlichen aktuellen Füllstand in dem Tank geben, insbesondere nicht, wenn der aktuelle Füllstand in dem Tank unterhalb des vorgegebenen minimalen Füllstandgrenzwertes liegt.

Durch die erfindungsgemäße Modellierung des theoretischen Füllstands kann ein aktueller Füllstand in dem Tank sehr exakt ermittelt werden. Um ein Nachfüllen des Tanks mit Wasser zu vermeiden oder zu verzögern, wird erfindungsgemäß die wenigstens Funktionseinheit des Kraftfahrzeugs in Abhängigkeit des jeweilig modellierten theoretischen Füllstands und/oder des jeweiligen Gradienten des modellierten theoretischen Füllstands betrieben. Hierzu kann eine geeignete Auswertungs-Software eingesetzt werden, die auf einer Recheneinheit ausgeführt wird. Durch das Vermeiden bzw. Verzögern von Nachfüllvorgängen kann der Aufwand zum Kühlen von Zylinderladungen in Brennräumen eines Verbrennungsmotors und somit zum Betreiben eines entsprechend ausgestatteten Kraftfahrzeugs reduziert werden.

Über die Ermittlung des momentanen Massenstroms der den Verdampfer umströmenden Luft und des momentanen Feuchtegehalts der den Verdampfer umströmenden Luft kann ein Eintrag von Wasser in den Tank über die Klimaanlage ermittelt werden. Über die Ermittlung des momentanen Massenstroms des dem Brennraum zuzuführenden Wassers kann ein Austrag von Wasser aus dem Tank zum Versorgen des Verbrennungsmotors ermittelt werden. Es kann zudem eine Wasserbilanz zwischen dem ermittelten Eintrag von Wasser in den Tank und dem Austrag von Wasser aus dem Tank ermittelt werden. Zu dieser Ermittlung der Wasserbilanz kann eine geeignete Auswertungs-Software eingesetzt werden, die auf einer Recheneinheit ausgeführt wird. Auf Basis der jeweilig ermittelten Wasserbilanz kann der theoretische Füllstand in dem Tank ermittelt werden. Die wenigstens eine Funktionseinheit des Kraftfahrzeugs kann in Abhängigkeit der jeweilig ermittelten Wasserbilanz einerseits und des jeweilig modellierten theoretischen Füllstands und/oder des jeweiligen Gradienten des modellierten theoretischen Füllstands andererseits betrieben werden.

Im Rahmen der Erfindung können auch zwei oder mehrere Funktionseinheiten des Kraftfahrzeugs in Abhängigkeit des jeweilig modellierten theoretischen Füllstands und/oder des jeweiligen Gradienten des modellierten theoretischen Füllstands betrieben werden. Zusätzlich kann die jeweilig ermittelte Wasserbilanz zum Betreiben dieser Funktionseinheiten verwendet werden.

Unter einer Funktionseinheit ist im Rahmen der Erfindung insbesondere eine solche Funktionseinheit zu verstehen, deren Betrieb einen Einfluss auf den Füllstand in dem Tank hat. Alternativ kann die Funktionseinheit Informationen über den mit dem erfindungsgemäßen Verfahren ermittelten tatsächlichen aktuellen Füllstand in dem Tank signalisieren.

Die Überwachung des Füllstands in dem Tank kann durch eine kontinuierliche oder zeitlich diskrete Messung des aktuellen Füllstands in dem Tank erfolgen, der größer oder gleich dem vorgegebenen minimalen Füllstandgrenzwert ist.

Der Vergleich des während der Überwachung des Füllstands in dem Tank jeweilig erfassten Füllstands mit dem vorgegebenen minimalen Füllstandgrenzwert und die Bewertung, ob der jeweilig erfasste Füllstand den vorgegebenen minimalen Füllstandgrenzwert unterschreitet, kann mittels einer geeigneten Auswertungs-Software realisiert sowie kontinuierlich oder zeitlich diskret vorgenommen werden.

Über den Verdampfer strömt eine Mischung aus Umluft und Frischluft. Die Umluft kann bereits entfeuchtet sein. Der Massenstrom der den Verdampfer umströmenden Frischluft kann aus der jeweiligen Ansteuerung von Luftklappen der Klimaanlage ermittelt werden. Der momentane Feuchtegehalt der Frischluft kann über wenigstens einen Feuchtesensor erfasst werden. Der momentane Massenstrom der den Verdampfer insgesamt umströmenden Luft kann unter Verwendung des ermittelten Massenstroms der den Verdampfer umströmenden Frischluft und eines Mischungsverhältnisses zwischen Umluft und Frischluft modelliert und hierdurch ermittelt werden. Der Feuchtegehalt der den Verdampfer insgesamt umströmenden Luft kann unter Verwendung des erfassten Feuchtegehalts der Frischluft und des Mischungsverhältnisses zwischen Umluft und Frischluft modelliert und hierdurch ermittelt werden.

Der momentane Massenstrom des dem Brennraum zuzuführenden Wassers kann aus einer jeweilig gegebenen Ansteuerung bzw. Öffnung von Ventilen, die zum Zuleiten des in dem Tank befindlichen Wassers zu dem wenigstens einen Brennraum des Verbrennungsmotors verwendet bzw. geöffnet werden, und dem jeweiligen Fluiddruck innerhalb von zur Zuleitung verwendeten Fluidleitungen modelliert und ermittelt werden. Das in dem Tank befindliche Wasser kann auch zwei oder mehreren, insbesondere allen, Brennräumen des Verbrennungsmotors zugeführt werden.

Gemäß einer vorteilhaften Ausgestaltung wird als Funktionseinheit die Klimaanlage verwendet, die in Abhängigkeit des jeweilig modellierten theoretischen Füllstands und/oder des jeweiligen Gradienten des modellierten theoretischen Füllstands aktiviert wird. Beispielsweise kann die Klimaanlage eingeschaltet oder hochgefahren werden, wenn erfasst wird, dass der jeweilig modellierte theoretische Füllstand in dem Tank nicht für eine beabsichtigte Einspritzung einer Menge an Wasser in den Verbrennungsmotor ausreicht, wenn also absehbar ist, dass der Tank bei dieser Einspritzung vollständig geleert werden würde, bevor die beabsichtigte Einspritzung abgeschlossen ist. Durch das Einschalten bzw. Hochfahren der Klimaanlage würde mehr Wasser an dem Verdampfer der Klimaanlage kondensieren und dem Tank zugeleitet werden. Alternativ oder additiv kann die Klimaanlage eingeschaltet oder hochgefahren werden, wenn aus dem jeweiligen Gradienten des modellierten theoretischen Füllstands absehbar ist, dass der Füllstand in dem Tank derart schnell abnimmt, dass der Tank bei der jeweilig beabsichtigten Einspritzung vollständig geleert werden würde, bevor die beabsichtigte Einspritzung abgeschlossen ist. Durch die gesteigerte Zuleitung an Wasser zu dem Tank kann ein Nachfüllen des Tanks mit Wasser verhindert oder reduziert werden, so dass der Aufwand zum Kühlen von Zylinderladungen in Brennräumen des Verbrennungsmotors und somit zum Betreiben eines entsprechend ausgestatteten Kraftfahrzeugs reduziert wird.

Nach einer weiteren vorteilhaften Ausgestaltung wird als Funktionseinheit der Verbrennungsmotor verwendet, wobei ein zum Betreiben des Verbrennungsmotors verwendetes Kennfeld in Abhängigkeit des jeweilig modellierten theoretischen Füllstands und/oder des Gradienten des modellierten theoretischen Füllstands aus einer Menge an Kennfeldern ausgewählt wird. Insbesondere kann ein Kennfeld ausgewählt werden, welches mit einem verringerten Wasserverbrauch des Verbrennungsmotors verbunden ist. Des Weiteren kann ein herkömmliches Kennfeld ausgewählt werden, nach dem der Zündwinkel, das Abgaslambda und dergleichen an einer verringerte Kühlung mittels der Wassereinspritzung angepasst werden, um maximal zulässige Temperaturen von Bauteilen im Abgasstrang nicht zu überschreiten und dadurch Schäden an diesen Bauteilen zu vermeiden. Bei dem herkömmlichen Kennfeld kann eine Zylinderladung in einem Brennraum gegebenenfalls durch eine Einspritzung von Kraftstoff auf einen maximal zulässigen Wert gekühlt werden. Der verringerte Wasserverbrauch ist mit einer Verzögerung oder Vermeidung von Nachfüllvorgängen verbunden, wodurch der Aufwand zum Kühlen von Zylinderladungen in Brennräumen des Verbrennungsmotors und somit zum Betreiben eines entsprechend ausgestatteten Kraftfahrzeugs reduziert wird.

Eine weitere vorteilhafte Ausgestaltung sieht vor, dass als Funktionseinheit der Verbrennungsmotor verwendet wird, wobei ein maximales Drehmoment des Verbrennungsmotors auf einen vorgegebenen maximalen Drehmomentgrenzwert begrenzt wird, und wobei der vorgegebene maximale Drehmomentgrenzwert in Abhängigkeit des jeweilig modellierten theoretischen Füllstands und/oder des Gradienten des modellierten theoretischen Füllstands aus einer Menge an vorgegebenen maximalen Drehmomentgrenzwerten ausgewählt wird. Durch die Begrenzung des maximalen Drehmoments des Verbrennungsmotors wird dessen Klopfneigung verringert und es treten geringere Abgastemperaturen auf, so dass die Kühlung von Zylinderladungen mittels Wassereinspritzung verringert werden kann oder nicht erfolgen muss. Hierdurch kann ein Nachfüllen des Tanks mit Wasser vermieden oder verzögert werden, wodurch der Aufwand zum Kühlen von Zylinderladungen in Brennräumen des Verbrennungsmotors und somit zum Betreiben eines entsprechend ausgestatteten Kraftfahrzeugs reduziert wird.

Es ist des Weiteren von Vorteil, wenn als Funktionseinheit eine Anzeigeeinheit des Kraftfahrzeugs verwendet wird, die zum Anzeigen eines Nachfüllsignals bezüglich einer Nachfüllung des Tanks mit Wasser in Abhängigkeit des jeweilig modellierten theoretischen Füllstands und/oder des jeweiligen Gradienten des modellierten theoretischen Füllstands angesteuert wird. Hierdurch kann einem Fahrer des Kraftfahrzeugs ein kritischer Füllstand in dem Tank signalisiert werden. Der Fahrer kann daraufhin seinen Fahrstil an die gegebene Situation anpassen, indem er den Verbrennungsmotor bei niedrigen Drehzahlen betreibt. Hierdurch kann eine Kühlung von Zylinderladungen reduziert oder abgestellt werden, was mit einem reduzierten Wasserverbrauch des Verbrennungsmotors einhergeht. Dies ist wiederum mit einer Reduzierung des Aufwands zum Kühlen von Zylinderladungen in Brennräumen des Verbrennungsmotors und somit des Aufwands zum Betreiben eines entsprechend ausgestatteten Kraftfahrzeugs verbunden.

Vorteilhafterweise wird die Anzeigeeinheit zum Anzeigen des Nachfüllsignals derart angesteuert, dass das Anzeigen des Nachfüllsignals mit einem Anzeigen eines weiteren Nachfüllsignals bezüglich einer Nachfüllung eines Kraftstofftanks des Kraftfahrzeugs mit Kraftstoff synchronisiert wird. Durch diese Synchronisation muss kein zusätzlicher Stopp zum Nachfüllen des Tanks mit Wasser erfolgen, was den Aufwand zum Kühlen von Zylinderladungen in Brennräumen des Verbrennungsmotors bzw. zum Betreiben eines entsprechend ausgestatteten Kraftfahrzeugs weitergehender reduziert.

Gemäß einer weiteren vorteilhaften Ausgestaltung wird eine Temperatur von wenigstens einem Bauteil eines Abgassystems des Kraftfahrzeugs erfasst, wobei als Funktionseinheit eine Zuführeinrichtung zum Zuführen des in dem Tank befindlichen Wassers zu dem Brennraum verwendet wird, und wobei die Zuführeinrichtung eingeschaltet oder eine Leistung der Zuführeinrichtung erhöht wird, wenn die jeweilig erfasste Temperatur des Bauteils einen vorgegebenen maximalen Temperaturgrenzwert überschreitet. Hiernach wird die thermische Trägheit der in dem Abgasstrang befindlichen Bauteile des Kraftfahrzeugs genutzt, um Wasser einzusparen. Dies verzögert ein Nachfüllen des Tanks mit Wasser, was wiederum den Aufwand zum Kühlen von Zylinderladungen in Brennräumen des Verbrennungsmotors und somit zum Betreiben eines entsprechend ausgestatteten Kraftfahrzeugs weitergehender reduziert. Bei insbesondere durch einen Beschleunigungsvorgang bedingten hohen Lasten erfolgt zwangsläufig ein Sprung zu einem hohen Abgasmassendurchsatz und hohen Abgastemperaturen über einem maximal zulässigen Temperaturgrenzwert. Der Verbrennungsmotor kann zunächst mit der erhöhten Abgastemperatur betrieben werden, bis die Bauteile des Abgassystems, beispielsweise die Auslassventile, der Krümmer, der Abgasturbolader, der Katalysator, die Lambdasonden und dergleichen, ihre maximal zulässige Temperatur erreicht haben. Bis zu diesem Zeitpunkt kann kein oder wenig Wasser zum Kühlen von Zylinderladungen verbraucht werden. Ab diesem Zeitpunkt kann die Abgastemperatur durch das Einspritzen von Wasser in die Brennräume des Verbrennungsmotors auf einen maximal zulässigen Temperaturgrenzwert eingeregelt werden, bei dem eine maximal zulässige Bauteiltemperatur nicht überschritten wird.

Das erfindungsgemäße System zum Betreiben von wenigstens einer Funktionseinheit eines Kraftfahrzeugs, wobei das Kraftfahrzeug wenigstens einen Tank zum Bevorraten von Wasser, das wenigstens einem Brennraum eines Verbrennungsmotors des Kraftfahrzeugs zuführbar ist, wenigstens eine Klimaanlage und wenigstens eine die Klimaanlage mit dem Tank verbindende Fluidzuleitung, über die ein an wenigstens einem Verdampfer der Klimaanlage kondensiertes Wasser dem Tank zuleitbar ist, aufweist, umfasst:
- wenigstens einen an dem Tank anordbaren Füllstandssensor, mit dem ein momentaner Füllstand in dem Tank erfassbar ist;
- wenigstens einen an der Klimaanlage anordbaren Feuchtesensor, mit dem ein momentaner Feuchtegehalt einer den Verdampfer umströmenden Frischluft erfassbar ist, die in einer den Verdampfer umströmenden Luft enthalten ist, die zusätzlich einen Umluftanteil enthält; und
- wenigstens eine kommunikationstechnisch mit der Funktionseinheit, dem Füllstandssensor und dem Feuchtesensor verbindbare Steuer- und/oder Regeleinheit, die eingerichtet ist,
- zu erfassen, ob ein Füllstand in dem Tank einen vorgegebenen minimalen Füllstandgrenzwert unterschreitet, und, wenn der Füllstand in dem Tank den vorgegebenen minimalen Füllstandgrenzwert unterschreitet
- einen momentanen Massenstrom der den Verdampfer umströmenden Frischluft aus einer jeweiligen Ansteuerung von Luftklappen der Klimaanlage zu ermitteln,
- einen momentanen Massenstrom der den Verdampfer umströmenden Luft unter Verwendung des ermittelten Massenstroms der den Verdampfer umströmenden Frischluft zu ermitteln,
- einen Feuchtegehalt der den Verdampfer umströmenden Luft unter Verwendung des erfassten Feuchtegehalts der Frischluft zu ermitteln,
- einen momentanen Massenstrom des dem Brennraum zuzuführenden Wassers aus einer jeweilig gegebenen Ansteuerung bzw. Öffnung von Ventilen, die zum Zuleiten des in dem Tank befindlichen Wassers zu dem Brennraum verwendet bzw. geöffnet werden, und einem jeweilig erfassten Fluiddruck innerhalb einer zur Zuleitung des Wassers zu dem Brennraum verwendeten Fluidleitung zu ermitteln,
- aus dem jeweilig ermittelten momentanen Massenstrom der Luft, dem jeweilig ermittelten momentanen Feuchtegehalt der Luft und dem jeweilig ermittelten momentanen Massenstrom des Wassers einen theoretischen Füllstand in dem Tank zu modellieren, und
- den Betrieb der Funktionseinheit in Abhängigkeit des jeweilig modellierten theoretischen Füllstands und/oder eines Gradienten des modellierten theoretischen Füllstands zu steuern und/oder zu regeln.

Mit dem System sind die oben mit Bezug auf das Verfahren genannten Vorteile entsprechend verbunden. Mit dem System sind auch zwei oder mehrere Funktionseinheiten des Kraftfahrzeugs betreibbar. Das System kann auch zwei oder mehrere Füllstandssensoren und/oder Feuchtesensoren aufweisen. Die Steuer- und/oder Regeleinheit kann eingerichtet sein, die oben beschriebene Wasserbilanz zu ermitteln und bei der Steuerung und/oder Regelung des Betriebs der wenigstens einen Funktionseinheit zu berücksichtigen.

Gemäß einer vorteilhaften Ausgestaltung ist die Funktionseinheit die Klimaanlage, wobei die Steuer- und/oder Regeleinheit eingerichtet ist, die Klimaanlage in Abhängigkeit des jeweilig modellierten theoretischen Füllstands und/oder des Gradienten des modellierten theoretischen Füllstands zu aktivieren. Mit dieser Ausgestaltung sind die oben mit Bezug auf die entsprechende Ausgestaltung des Verfahrens genannten Vorteile entsprechend verbunden.

Nach einer weiteren vorteilhaften Ausgestaltung ist die Funktionseinheit der Verbrennungsmotor, wobei die Steuer- und/oder Regeleinheit eingerichtet ist, ein zum Betreiben des Verbrennungsmotors verwendetes Kennfeld in Abhängigkeit des jeweilig modellierten theoretischen Füllstands und/oder des Gradienten des modellierten theoretischen Füllstands aus einer Menge an Kennfeldern auszuwählen. Mit dieser Ausgestaltung sind die oben mit Bezug auf die entsprechende Ausgestaltung des Verfahrens genannten Vorteile entsprechend verbunden.

Eine weitere vorteilhafte Ausgestaltung sieht vor, dass die Funktionseinheit der Verbrennungsmotor ist, wobei die Steuer- und/oder Regeleinheit eingerichtet ist, ein maximales Drehmoment des Verbrennungsmotors auf einen vorgegebenen maximalen Drehmomentgrenzwert zu begrenzen und den vorgegebenen maximalen Drehmomentgrenzwert in Abhängigkeit des jeweilig modellierten theoretischen Füllstands und/oder des Gradienten des modellierten theoretischen Füllstands aus einer Menge an vorgegebenen maximalen Drehmomentgrenzwerten auszuwählen. Mit dieser Ausgestaltung sind die oben mit Bezug auf die entsprechende Ausgestaltung des Verfahrens genannten Vorteile entsprechend verbunden.

Es ist des Weiteren von Vorteil, wenn die Funktionseinheit eine Anzeigeeinheit des Kraftfahrzeugs ist, wobei die Steuer- und/oder Regeleinheit eingerichtet ist, die Anzeigeeinheit zum Anzeigen eines Nachfüllsignals bezüglich einer Nachfüllung des Tanks mit Wasser in Abhängigkeit des jeweilig modellierten theoretischen Füllstands und/oder des Gradienten des modellierten theoretischen Füllstands anzusteuern. Mit dieser Ausgestaltung sind die oben mit Bezug auf die entsprechende Ausgestaltung des Verfahrens genannten Vorteile entsprechend verbunden.

Vorteilhafterweise ist die Steuer- und/oder Regeleinheit eingerichtet, die Anzeigeeinheit zum Anzeigen des Nachfüllsignals derart anzusteuern, dass das Anzeigen des Nachfüllsignals mit einem Anzeigen eines weiteren Nachfüllsignals bezüglich einer Nachfüllung eines Kraftstofftanks des Kraftfahrzeugs mit Kraftstoff synchronisiert ist. Mit dieser Ausgestaltung sind die oben mit Bezug auf die entsprechende Ausgestaltung des Verfahrens genannten Vorteile entsprechend verbunden.

Gemäß einer weiteren vorteilhaften Ausgestaltung umfasst das System wenigstens eine kommunikationstechnisch mit der Steuer- und/oder Regeleinheit verbindbare Sensoreinheit, mit der eine Temperatur von wenigstens einem Bauteil eines Abgassystems des Kraftfahrzeugs erfassbar ist, wobei die Funktionseinheit eine Zuführeinrichtung zum Zuführen des in dem Tank befindlichen Wassers zu dem Brennraum ist, wobei die Steuer- und/oder Regeleinheit eingerichtet ist, die Zuführeinrichtung einzuschalten oder eine Leistung der Zuführeinrichtung zu erhöhen, wenn die jeweilig mittels der Sensoreinheit erfasste Temperatur des Bauteils einen vorgegebenen maximalen Temperaturgrenzwert überschreitet. Mit dieser Ausgestaltung sind die oben mit Bezug auf die entsprechende Ausgestaltung des Verfahrens genannten Vorteile entsprechend verbunden.

Weitere Einzelheiten, Merkmale und Vorteile der Erfindung ergeben sich aus der nachfolgenden Beschreibung und den Figur. Es zeigt:

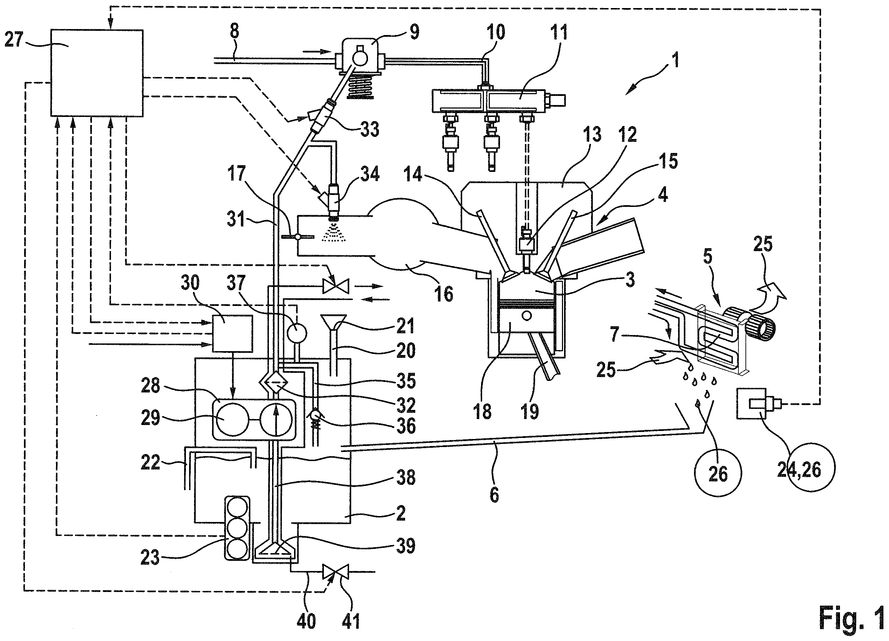

- Figur 1: eine schematische Darstellung eines mit einem Ausführungsbeispiel für ein erfindungsgemäßes System ausgestatteten Kraftfahrzeugs.

Figur 1 zeigt eine schematische Darstellung eines Kraftfahrzeugs 1, das mit einem Ausführungsbeispiel für ein erfindungsgemäßes System zum Betreiben von wenigstens einer Funktionseinheit des Kraftfahrzeugs 1 ausgestattet ist.

Das Kraftfahrzeug 1 umfasst einen Tank 2 zum Bevorraten von Wasser, das Brennräumen 3 eines Verbrennungsmotors 4 des Kraftfahrzeugs 1 zuführbar ist, wobei in Figur 1 lediglich ein Brennraum 3 dargestellt ist. In jedem Brennraum 3 ist ein Kolben 18 mittels eines Pleuels 19 bewegbar angeordnet.

Des Weiteren umfasst das Kraftfahrzeug 1 eine Klimaanlage 5 und eine die Klimaanlage 5 mit dem Tank 2 verbindende Fluidzuleitung 6, über die ein an einem Verdampfer 7 der Klimaanlage 5 kondensiertes Wasser, das durch die Tropfen angedeutet ist, dem Tank 2 zuleitbar ist.

Das Kraftfahrzeug 1 umfasst eine Kraftstoffleitung 8, eine Hochdruckpumpe 9, eine weitere Fluidleitung 10, eine Schiene 11 mit nicht gezeigtem Volumenteiler und nicht gezeigtem Drucksensor sowie ein Hochdruckeinspritzventil 12, über die den Brennräumen 3 ein Kraftstoff zugeführt werden kann. Das Hochdruckeinspritzventil 12 ist an einem Zylinderkopf 13 des Verbrennungsmotors 4 angeordnet, an dem auch Einlassventile 14 und Auslassventile 15 angeordnet sind. Über die Einlassventile 14 sind die Brennräume 3 fluidleitend mit einer dem Verbrennungsmotor 4 vorgeschalteten Sauganlage 16 des Kraftfahrzeugs 1 verbindbar. Eine Einlassöffnung der Sauganlage 16 ist mittels eines Schließelementes 17 schließbar oder freigebbar.

An dem Tank 2 ist ein Füllrohr 20 mit Sieb 21 und nicht gezeigter Belüftung angeordnet. Des Weiteren ist an dem Tank 2 ein Überlauf 22 angeordnet. Zudem ist an dem Tank 2 eine Ablassleitung 39 mit einem Ablassventil 40 angeordnet.

Das Kraftfahrzeug 1 umfasst eine digitale Motorelektronik 26, die insbesondere den Betrieb des Verbrennungsmotors 4 steuert und/oder regelt.

Das Kraftfahrzeug 1 umfasst eine Zuführeinrichtung zum Zuführen des in dem Tank 2 befindlichen Wassers zu den Brennräumen 3. Die Zuführeinrichtung umfasst eine Pumpe 27, deren Motor 28 über einen Leistungsregler 39 mittels der digitalen Motorelektronik 26 ansteuerbar ist. Die Pumpe 27 ist über eine Fluidleitung 30, in der ein Feinfilter 31 angeordnet ist, mit einem Dosierventil 32 zum Einleiten von Wasser in die Hochdruckpumpe 9 und einem Einspritzventil 33 zum Einspritzen von Wasser in die Sauganlage 16 verbunden. Von der Fluidleitung 30 zweigt eine Fluidleitung 34 ab, an der ein Druckregelventil 35 und ein Drucksensor 36 angeordnet sind, wobei der Drucksensor 36 kommunikationstechnisch mit der digitalen Motorelektronik 26 verbunden ist. Über den Drucksensor 36 ist ein Fluiddruck in der Fluidleitung 30 erfassbar. Die Pumpe 27 ist des Weiteren fluidleitend mit einer Ansaugleitung 37 verbunden, an der ein Vorfilter 38 angeordnet ist.

Das System umfasst einen an dem Tank 2 angeordneten Füllstandssensor 23, mit dem ein momentaner Füllstand in dem Tank 2 erfassbar ist. Zudem kann mit dem Füllstandssensor 23 eine Qualität und eine Temperatur des in dem Tank 2 befindlichen Wassers erfasst werden. Der Füllstandssensor 23 ist kommunikationstechnisch mit der digitalen Motorelektronik 26 verbunden.

Das System umfasst des Weiteren einen an der Klimaanlage 5 angeordneten Feuchtesensor 24, mit dem ein momentaner Feuchtegehalt einer den Verdampfer 7 umströmenden Frischluft erfassbar ist, die in einer den Verdampfer 7 umströmenden Luft, die durch die Pfeile 25 angedeutet ist, enthalten ist, die zusätzlich einen Umluftanteil enthält. Der der Feuchtesensor 24 ist kommunikationstechnisch mit der digitalen Motorelektronik 26 verbunden.

Zudem umfasst das System eine kommunikationstechnisch mit der Funktionseinheit, dem Füllstandssensor 23 und dem Feuchtesensor 24 verbindbare Steuer- und/oder Regeleinheit, die zumindest teilweise durch die digitale Motorelektronik 26 ausgebildet ist. Die Steuer- und/oder Regeleinheit ist eingerichtet, zu erfassen, ob ein Füllstand in dem Tank 2 einen vorgegebenen minimalen Füllstandgrenzwert unterschreitet, und, wenn der Füllstand in dem Tank 2 den vorgegebenen minimalen Füllstandgrenzwert unterschreitet, einen momentanen Massenstrom der den Verdampfer 7 umströmenden Frischluft aus einer jeweiligen Ansteuerung von nicht gezeigten Luftklappen der Klimaanlage 5 zu ermitteln, einen momentanen Massenstrom der den Verdampfer 7 umströmenden Luft unter Verwendung des ermittelten Massenstroms der den Verdampfer 7 umströmenden Frischluft zu ermitteln, einen Feuchtegehalt der den Verdampfer 7 umströmenden Luft unter Verwendung des erfassten Feuchtegehalts der Frischluft zu ermitteln, einen momentanen Massenstrom des dem Brennraum 3 zuzuführenden Wassers aus einer jeweilig gegebenen Ansteuerung bzw. Öffnung von Ventilen 32 (Dosierventil) und 33 (Einspritzventil), die zum Zuleiten des in dem Tank 2 befindlichen Wassers zu dem wenigstens einen Brennraum 3 des Verbrennungsmotors 4 verwendet bzw. geöffnet werden, und einem jeweilig über einen Drucksensor 36 erfassten Fluiddruck innerhalb einer zur Zuleitung des Wassers zu dem Brennraum 3 verwendeten Fluidleitung 30 zu ermitteln, aus dem jeweilig ermittelten momentanen Massenstrom der Luft, dem jeweilig ermittelten momentanen Feuchtegehalt der Luft und dem jeweilig ermittelten momentanen Massenstrom des Wassers einen theoretischen Füllstand in dem Tank 2 zu modellieren, und den Betrieb der Funktionseinheit in Abhängigkeit des jeweilig modellierten theoretischen Füllstands und/oder eines Gradienten des modellierten theoretischen Füllstands zu steuern und/oder zu regeln. Es wird somit der absolute Feuchtegehalt der Ansaugluft ermittelt. Zudem kann die bei der jeweilig gegebenen Temperatur des Verdampfers 7 ausfallende Wassermenge berechnet werden, um eine oben erwähnte Wasserbilanz aufstellen zu können.

Die Steuer- und/oder Regeleinheit ist eingerichtet, als Funktionseinheit die Klimaanlage 5 in Abhängigkeit des jeweilig modellierten theoretischen Füllstands und/oder des jeweiligen Gradienten des modellierten theoretischen Füllstands zu aktivieren.

Die Steuer- und/oder Regeleinheit ist des Weiteren eingerichtet, ein zum Betreiben des als weitere Funktionseinheit verwendeten Verbrennungsmotors 4 verwendetes Kennfeld in Abhängigkeit des jeweilig modellierten theoretischen Füllstands und/oder des jeweiligen Gradienten des modellierten theoretischen Füllstands aus einer Menge an Kennfeldern auszuwählen. Alternativ oder additiv kann die Steuer- und/oder Regeleinheit eingerichtet sein, ein maximales Drehmoment des Verbrennungsmotors 4 auf einen vorgegebenen maximalen Drehmomentgrenzwert zu begrenzen und den vorgegebenen maximalen Drehmomentgrenzwert in Abhängigkeit des jeweilig modellierten theoretischen Füllstands und/oder des jeweiligen Gradienten des modellierten theoretischen Füllstands aus einer Menge an vorgegebenen maximalen Drehmomentgrenzwerten auszuwählen.

Die Steuer- und/oder Regeleinheit kann des Weiteren eingerichtet sein, als weitere Funktionseinheit eine nicht gezeigte Anzeigeeinheit des Kraftfahrzeugs 1 zum Anzeigen eines Nachfüllsignals bezüglich einer Nachfüllung des Tanks 2 mit Wasser in Abhängigkeit des jeweilig modellierten theoretischen Füllstands und/oder des jeweiligen Gradienten des modellierten theoretischen Füllstands anzusteuern. Insbesondere kann die Steuer- und/oder Regeleinheit eingerichtet sein, die Anzeigeeinheit zum Anzeigen des Nachfüllsignals derart anzusteuern, dass das Anzeigen des Nachfüllsignals mit einem Anzeigen eines weiteren Nachfüllsignals bezüglich einer Nachfüllung eines Kraftstofftanks des Kraftfahrzeugs mit Kraftstoff synchronisiert ist.

Das System umfasst ferner eine kommunikationstechnisch mit der Steuer- und/oder Regeleinheit verbindbare, nicht gezeigte Sensoreinheit, mit der eine Temperatur von wenigstens einem Bauteil, beispielsweise des Auslassventils 15, eines Abgassystems des Kraftfahrzeugs 1 erfassbar ist, wobei als weitere Funktionseinheit die Zuführeinrichtung zum Zuführen des in dem Tank 2 befindlichen Wassers zu den Brennräumen 3 verwendet wird. Die Steuer- und/oder Regeleinheit ist eingerichtet, die Zuführeinrichtung einzuschalten oder eine Leistung der Zuführeinrichtung durch eine Ansteuerung der Pumpe 28, des Dosierventils 33 und/oder des Einspritzventils 34 zu erhöhen, wenn die jeweilig mittels der Sensoreinheit erfasste Temperatur des Bauteils einen vorgegebenen maximalen Temperaturgrenzwert überschreitet.

### Bezugszeichenliste:

- 1: Kraftfahrzeug
- 2: Tank
- 3: Brennraum
- 4: Verbrennungsmotor
- 5: Klimaanlage
- 6: Fluidzuleitung
- 7: Verdampfer
- 8: Kraftstoffleitung
- 9: Hochdruckpumpe
- 10: Fluidleitung
- 11: Schiene
- 12: Hochdruckeinspritzventil
- 13: Zylinderkopf
- 14: Einlassventil
- 15: Auslassventil
- 16: Sauganlage
- 17: Schließelement
- 18: Kolben
- 19: Pleuel
- 20: Füllrohr
- 21: Sieb
- 22: Überlauf
- 23: Füllstandssensor
- 24: Feuchtesensor
- 25: Pfeil
- 26: Motorelektronik
- 27: Pumpe
- 28: Motor
- 29: Leistungsregler
- 30: Fluidleitung
- 31: Feinfilter
- 32: Dosierventil
- 33: Einspritzventil
- 34: Fluidleitung
- 35: Druckregelventil
- 36: Drucksensor
- 37: Ansaugleitung
- 38: Vorfilter
- 39: Ablassleitung
- 40: Ablassventil

## Patentansprüche

1. Verfahren zum Betreiben von wenigstens einer Funktionseinheit eines Kraftfahrzeugs (1), wobei
- ein Füllstand in einem Tank (2) zum Bevorraten von Wasser, das wenigstens einem Brennraum (3) eines Verbrennungsmotors (4), insbesondere Ottomotors, des Kraftfahrzeugs (1) zur Kühlung einer darin befindlichen Zylinderladung zuführbar ist, überwacht wird,
- der während der Überwachung des Füllstands in dem Tank (2) jeweilig erfasste Füllstand mit einem vorgegebenen minimalen Füllstandgrenzwert verglichen wird, wobei, wenn aus dem jeweiligen Vergleich folgt, dass der jeweilig erfasste Füllstand den vorgegebenen minimalen Füllstandgrenzwert unterschreitet,
- ein momentaner Massenstrom einer einen Verdampfer (7) einer über wenigstens eine Fluidzuleitung (6) mit dem Tank (2) verbundenen Klimaanlage (5) des Kraftfahrzeugs (1) umströmenden Luft erfasst wird, wobei über die Fluidzuleitung (6) ein an dem Verdampfer (7) kondensiertes Wasser dem Tank (2) zugeleitet wird,
- ein momentaner Feuchtegehalt der den Verdampfer (7) umströmenden Luft erfasst wird,
- ein momentaner Massenstrom des dem Brennraum (3) zuzuführenden Wassers erfasst wird,
- ein theoretischer Füllstand in dem Tank (2) aus dem jeweilig erfassten momentanen Massenstrom der Luft, dem jeweilig erfassten momentanen Feuchtegehalt der Luft und dem jeweilig erfassten momentanen Massenstrom des Wassers modelliert wird, und
- die Funktionseinheit in Abhängigkeit des jeweilig modellierten theoretischen Füllstands und/oder eines jeweiligen Gradienten des modellierten theoretischen Füllstands betrieben wird.

2. Verfahren nach Anspruch 1, **dadurch gekennzeichnet, dass** als Funktionseinheit die Klimaanlage (5) verwendet wird, die in Abhängigkeit des jeweilig modellierten theoretischen Füllstands und/oder des jeweiligen Gradienten des modellierten theoretischen Füllstands aktiviert wird.

3. Verfahren nach Anspruch 1 oder 2, **dadurch gekennzeichnet, dass** als Funktionseinheit der Verbrennungsmotor (4) verwendet wird, wobei ein zum Betreiben des Verbrennungsmotors (4) verwendetes Kennfeld in Abhängigkeit des jeweilig modellierten theoretischen Füllstands und/oder des jeweiligen Gradienten des modellierten theoretischen Füllstands aus einer Menge an Kennfeldern ausgewählt wird.

4. Verfahren nach einem der Ansprüche 1 bis 3, **dadurch gekennzeichnet, dass** als Funktionseinheit der Verbrennungsmotor (4) verwendet wird, wobei ein maximales Drehmoment des Verbrennungsmotors (4) auf einen vorgegebenen maximalen Drehmomentgrenzwert begrenzt wird, und wobei der vorgegebene maximale Drehmomentgrenzwert in Abhängigkeit des jeweilig modellierten theoretischen Füllstands und/oder des jeweiligen Gradienten des modellierten theoretischen Füllstands aus einer Menge an vorgegebenen maximalen Drehmomentgrenzwerten ausgewählt wird.

5. Verfahren nach einem der Ansprüche 1 bis 4, **dadurch gekennzeichnet, dass** als Funktionseinheit eine Anzeigeeinheit des Kraftfahrzeugs (1) verwendet wird, die zum Anzeigen eines Nachfüllsignals bezüglich einer Nachfüllung des Tanks (2) mit Wasser in Abhängigkeit des jeweilig modellierten theoretischen Füllstands und/oder des jeweiligen Gradienten des modellierten theoretischen Füllstands angesteuert wird.

6. Verfahren nach Anspruch 5, **dadurch gekennzeichnet, dass** die Anzeigeeinheit zum Anzeigen des Nachfüllsignals derart angesteuert wird, dass das Anzeigen des Nachfüllsignals mit einem Anzeigen eines weiteren Nachfüllsignals bezüglich einer Nachfüllung eines Kraftstofftanks des Kraftfahrzeugs (1) mit Kraftstoff synchronisiert wird.

7. Verfahren nach einem der Ansprüche 1 bis 6, **dadurch gekennzeichnet, dass** eine Temperatur von wenigstens einem Bauteil eines Abgassystems des Kraftfahrzeugs (1) erfasst wird, wobei als Funktionseinheit eine Zuführeinrichtung zum Zuführen des in dem Tank (2) befindlichen Wassers zu dem Brennraum (3) verwendet wird, und wobei die Zuführeinrichtung eingeschaltet oder eine Leistung der Zuführeinrichtung erhöht wird, wenn die jeweilig erfasste Temperatur des Bauteils einen vorgegebenen maximalen Temperaturgrenzwert überschreitet.

8. System zum Betreiben von wenigstens einer Funktionseinheit eines Kraftfahrzeugs (1), wobei das Kraftfahrzeug (1) wenigstens einen Tank (2) zum Bevorraten von Wasser, das wenigstens einem Brennraum (3) eines Verbrennungsmotors (4), insbesondere Ottomotors, des Kraftfahrzeugs (1) zuführbar ist, wenigstens eine Klimaanlage (5) und wenigstens eine die Klimaanlage (5) mit dem Tank (2) verbindende Fluidzuleitung (6), über die ein an wenigstens einem Verdampfer (7) der Klimaanlage (5) kondensiertes Wasser dem Tank (2) zuleitbar ist, aufweist, mit:
- wenigstens einem an dem Tank (2) anordbaren Füllstandssensor (23), mit dem ein momentaner Füllstand in dem Tank (2) erfassbar ist;
- wenigstens einem an der Klimaanlage (5) anordbaren Feuchtesensor (24), mit dem ein momentaner Feuchtegehalt einer den Verdampfer (7) umströmenden Frischluft erfassbar ist, die in einer den Verdampfer (7) umströmenden Luft enthalten ist, die zusätzlich einen Umluftanteil enthält; und
- wenigstens einer kommunikationstechnisch mit der Funktionseinheit, dem Füllstandssensor (23) und dem Feuchtesensor (24) verbindbaren Steuer- und/oder Regeleinheit, die eingerichtet ist,
- zu erfassen, ob ein Füllstand in dem Tank (2) einen vorgegebenen minimalen Füllstandgrenzwert unterschreitet, und, wenn der Füllstand in dem Tank (2) den vorgegebenen minimalen Füllstandgrenzwert unterschreitet
- einen momentanen Massenstrom der den Verdampfer (7) umströmenden Frischluft aus einer jeweiligen Ansteuerung von Luftklappen der Klimaanlage (5) zu ermitteln,
- einen momentanen Massenstrom der den Verdampfer (7) umströmenden Luft unter Verwendung des ermittelten Massenstroms der den Verdampfer (7) umströmenden Frischluft zu ermitteln,
- einen Feuchtegehalt der den Verdampfer (7) umströmenden Luft unter Verwendung des erfassten Feuchtegehalts der Frischluft zu ermitteln,
- einen momentanen Massenstrom des dem Brennraum (3) zuzuführenden Wassers aus einer jeweilig gegebenen Ansteuerung bzw. Öffnung von Ventilen (32, 33), die zum Zuleiten des in dem Tank (2) befindlichen Wassers zu dem Brennraum (3) verwendet bzw. geöffnet werden, und einem jeweilig erfassten Fluiddruck innerhalb einer zur Zuleitung des Wassers zu dem Brennraum (3) verwendeten Fluidleitung (30) zu ermitteln,
- aus dem jeweilig ermittelten momentanen Massenstrom der Luft, dem jeweilig ermittelten momentanen Feuchtegehalt der Luft und dem jeweilig ermittelten momentanen Massenstrom des Wassers einen theoretischen Füllstand in dem Tank (2) zu modellieren, und
- den Betrieb der Funktionseinheit in Abhängigkeit des jeweilig modellierten theoretischen Füllstands und/oder eines Gradienten des modellierten theoretischen Füllstands zu steuern und/oder zu regeln.

9. System nach Anspruch 8, **dadurch gekennzeichnet, dass** die Funktionseinheit die Klimaanlage (5) ist, wobei die Steuer- und/oder Regeleinheit eingerichtet ist, die Klimaanlage (5) in Abhängigkeit des jeweilig modellierten theoretischen Füllstands und/oder des jeweiligen Gradienten des modellierten theoretischen Füllstands zu aktivieren.

10. System nach Anspruch 8 oder 9, **dadurch gekennzeichnet, dass** die Funktionseinheit der Verbrennungsmotor (4) ist, wobei die Steuer- und/oder Regeleinheit eingerichtet ist, ein zum Betreiben des Verbrennungsmotors (4) verwendetes Kennfeld in Abhängigkeit des jeweilig modellierten theoretischen Füllstands und/oder des jeweiligen Gradienten des modellierten theoretischen Füllstands aus einer Menge an Kennfeldern auszuwählen.

11. System nach einem der Ansprüche 8 bis 10, **dadurch gekennzeichnet, dass** die Funktionseinheit der Verbrennungsmotor (4) ist, wobei die Steuer- und/oder Regeleinheit eingerichtet ist, ein maximales Drehmoment des Verbrennungsmotors (4) auf einen vorgegebenen maximalen Drehmomentgrenzwert zu begrenzen und den vorgegebenen maximalen Drehmomentgrenzwert in Abhängigkeit des jeweilig modellierten theoretischen Füllstands und/oder des jeweiligen Gradienten des modellierten theoretischen Füllstands aus einer Menge an vorgegebenen maximalen Drehmomentgrenzwerten auszuwählen.

12. System nach einem der Ansprüche 8 bis 11, **dadurch gekennzeichnet, dass** die Funktionseinheit eine Anzeigeeinheit des Kraftfahrzeugs (1) ist, wobei die Steuer- und/oder Regeleinheit eingerichtet ist, die Anzeigeeinheit zum Anzeigen eines Nachfüllsignals bezüglich einer Nachfüllung des Tanks (2) mit Wasser in Abhängigkeit des jeweilig modellierten theoretischen Füllstands und/oder des jeweiligen Gradienten des modellierten theoretischen Füllstands anzusteuern.

13. System nach Anspruch 12, **dadurch gekennzeichnet, dass** die Steuer- und/oder Regeleinheit eingerichtet ist, die Anzeigeeinheit zum Anzeigen des Nachfüllsignals derart anzusteuern, dass das Anzeigen des Nachfüllsignals mit einem Anzeigen eines weiteren Nachfüllsignals bezüglich einer Nachfüllung eines Kraftstofftanks des Kraftfahrzeugs (1) mit Kraftstoff synchronisiert ist.

14. System nach einem der Ansprüche 8 bis 13, **gekennzeichnet durch** wenigstens eine kommunikationstechnisch mit der Steuer- und/oder Regeleinheit verbindbare Sensoreinheit, mit der eine Temperatur von wenigstens einem Bauteil eines Abgassystems des Kraftfahrzeugs (1) erfassbar ist, wobei die Funktionseinheit eine Zuführeinrichtung zum Zuführen des in dem Tank (2) befindlichen Wassers zu dem Brennraum (3) ist, wobei die Steuer- und/oder Regeleinheit eingerichtet ist, die Zuführeinrichtung einzuschalten oder eine Leistung der Zuführeinrichtung zu erhöhen, wenn die jeweilig mittels der Sensoreinheit erfasste Temperatur des Bauteils einen vorgegebenen maximalen Temperaturgrenzwert überschreitet.

## Claims

1. A method for operating at least one functional unit of a motor vehicle (1), wherein
- a filling level in a tank (2) for storing water which can be fed to at least one combustion chamber (3) of an internal combustion engine (4), especially a spark ignition engine, of the motor vehicle (1) for cooling a cylinder charge located therein, is monitored,
- the filling level, respectively detected in the tank (2) during monitoring of the filling level, is compared with a predetermined minimum filling level limiting value, wherein, if the respective comparison shows that the respectively detected filling level falls below the predetermined minimum filling level limiting value,
- a current mass flow of air is detected, which air flows around an evaporator (7) of an air conditioning system (5) of the motor vehicle (1), which air conditioning system is connected to the tank (2) via at least one fluid feed line (6), wherein water condensed in the evaporator (7) is fed to the tank (2) via the fluid feed line (6),
- a current moisture content of the air, flowing around the evaporator (7), is detected,
- a current mass flow of the water to be fed to the combustion chamber (3) is detected,
- a theoretical filling level in the tank (2) is modelled from the respectively detected current mass flow of the air, from the respectively detected current moisture content of the air and from the respectively detected current mass flow of the water, and
- the functional unit is operated subject to the respectively modelled theoretical filling level and/or to a respective gradient of the modelled theoretical filling level.

2. A method according to claim 1, **characterised in that** the air conditioning system (5) which is activated subject to the respectively modelled theoretical filling level and/or to the respective gradient of the modelled theoretical filling level, is used as the functional unit.

3. A method according to claim 1 or claim 2, **characterised in that** the internal combustion engine (4) is used as the functional unit, a characteristic map, used for operating the internal combustion engine (4), being selected from a set of characteristic maps, subject to the respectively modelled theoretical filling level and/or to the respective gradient of the modelled theoretical filling level.

4. A method according to any of claims 1 to 3, **characterised in that** the internal combustion engine (4) is used as the functional unit, a maximum torque of the internal combustion engine (4) being restricted to a predetermined maximum torque limiting value, and the predetermined maximum torque limiting value being selected from a set of predetermined maximum torque limiting values, subject to the respectively modelled theoretical filling level and/or to the respective gradient of the modelled theoretical filling level.

5. A method according to any of claims 1 to 4, **characterised in that** a display unit of the motor vehicle (1) is used as the functional unit, which display unit is activated to display a refill signal with respect to refilling the tank (2) with water, subject to the respectively modelled theoretical filling level and/or to the respective gradient of the modelled theoretical filling level.

6. A method according to claim 5, **characterised in that** the display unit for displaying the refill signal is activated such that the display of the refill signal is synchronised with a display of a further refill signal with respect to a refilling of a fuel tank of the motor vehicle (1) with fuel.

7. A method according to any of claims 1 to 6, **characterised in that** a temperature of at least one component of an exhaust system of the motor vehicle (1) is detected, a feed means for feeding the water in the tank to the combustion chamber (3) being used as the functional unit, and the feed means being switched on or a power of the feed means being increased when the respectively detected temperature of the component exceeds a predetermined maximum temperature limiting value.

8. A system for operating at least one functional unit of a motor vehicle (1), wherein the motor vehicle (1) has at least one tank (2) for storing water which can be fed to at least one combustion chamber (3) of an internal combustion engine (4), especially a spark ignition engine, of the motor vehicle (1), at least one air conditioning system (5) and at least one fluid feed line (6), which connects the air conditioning system (5) to the tank (2) and via which water condensed in at least one evaporator (7) of the air conditioning system (5) can be fed to the tank (2), with:
- at least one filling level sensor (23) which can be arranged on the tank (2) and which can detect a current filling level in the tank (2);
- at least one moisture sensor (24) which can be arranged on the air conditioning system (5) and which can detect a current moisture content of fresh air flowing around the evaporator (7), which fresh air is contained in air which flows around the evaporator (7) and also contains an amount of recirculated air; and
- at least one control and/or regulating unit which can be connected in terms of communication to the functional unit, to the filling level sensor (23) and to the moisture sensor (24) and which is configured
- to detect whether a filling level in the tank (2) falls below a predetermined minimum filling level limiting value and, if the filling level in the tank (2) falls below the predetermined minimum filling level limiting value
- to determine a current mass flow of the fresh air, flowing around the evaporator (7) from a respective activation of ventilation flaps of the air conditioning system (5),
- to determine a current mass flow of the air, flowing around the evaporator (7), using the determined mass flow of the fresh air flowing around the evaporator (7),
- to determine a moisture content of the air, flowing around the evaporator (7), using the detected moisture content of the fresh air,
- to determine a current mass flow of the water to be fed to the combustion chamber (3), from a respectively provided activation or opening of valves (32, 33) which are used or opened to feed the water in the tank (2) to the combustion chamber (3), and from a respectively detected fluid pressure within a fluid line (30) used to feed the water to the combustion chamber (3),
- to model a theoretical filling level in the tank (2) from the respectively determined current mass flow of the air, from the respectively determined current moisture content of the air and from the respectively determined current mass flow of the water, and
- to control and/or regulate the operation of the functional unit subject to the respectively modelled theoretical filling level and/or to a gradient of the modelled theoretical filling level.

9. A system according to claim 8, **characterised in that** the functional unit is the air conditioning system (5), the control and/or regulating unit being configured to activate the air conditioning system (5), subject to the respectively modelled theoretical filling level and/or to the respective gradient of the modelled theoretical filling level.

10. A system according to claim 8 or claim 9, **characterised in that** the functional unit is the internal combustion engine (4), the control and/or regulating unit being configured to select a characteristic map, used for operating the internal combustion engine (4), from a set of characteristic maps, subject to the respectively modelled theoretical filling level and/or to the respective gradient of the modelled theoretical filling level.

11. A system according to any of claims 8 to 10, **characterised in that** the functional unit is the internal combustion engine (4), the control and/or regulating unit being configured to restrict a maximum torque of the internal combustion engine (4) to a predetermined maximum torque limiting value and to select the predetermined maximum torque limiting value from a set of predetermined maximum torque limiting values subject to the respectively modelled theoretical filling level and/or to the respective gradient of the modelled theoretical filling level.

12. A system according to any of claims 8 to 11, **characterised in that** the functional unit is a display unit of the motor vehicle (1), the control and/or regulating unit being configured to activate the display unit to display a refill signal with respect to refilling the tank (2) with water, subject to the respectively modelled theoretical filling level and/or to the respective gradient of the modelled theoretical filling level.

13. A system according to claim 12, **characterised in that** the control and/or regulating unit is configured to activate the display unit to display the refill signal such that the display of the refill signal is synchronised with a display of a further refill signal with respect to a refilling of a fuel tank of the motor vehicle (1) with fuel.

14. A system according to any of claims 8 to 13, **characterised by** at least one sensor unit which can be connected in terms of communication to the control and/or regulating unit and which can detect a temperature of at least one component of an exhaust system of the motor vehicle (1), the functional unit being a feed means for feeding the water in the tank (2) to the combustion chamber (3), the control and/or regulating unit being configured to switch on the feed means or to increase a power of the feed means if the temperature of the component, respectively detected by the sensor unit, exceeds a predetermined maximum temperature limiting value.

## Revendications

1. Procédé de gestion d'au moins une unité fonctionnelle d'un véhicule automobile selon lequel :
- on surveille le niveau dans un réservoir de stockage (2) d'eau pouvant être transférée dans au moins une chambre de combustion (3) du moteur à combustion interne (4), en particulier du moteur à essence du véhicule (1) pour permettre de refroidir la charge des cylindres de celui-ci,
- on compare le niveau respectivement détecté pendant la surveillance du niveau dans le réservoir (2) avec une valeur limite minimum du niveau prédéfinie, et, lorsqu'il résulte de cette comparaison que le niveau respectivement détecté passe au-dessous de la valeur limite minimum du niveau prédéfinie,
- on détecte le débit massique instantané de l'air circulant autour de l'évaporateur (7) d'une installation de climatisation (5) du véhicule (1) reliée au réservoir (2) par l'intermédiaire d'au moins une conduite d'alimentation en fluide (6), par cette conduite d'alimentation en fluide (6) de l'eau condensée au niveau de l'évaporateur (7) étant transférée dans le réservoir (2),
- on détecte la teneur en humidité instantanée de l'air circulant autour de l'évaporateur (7),
- on détecte le débit massique instantané de l'eau devant être transférée vers la chambre de combustion (3),
- on effectue une modélisation d'un niveau théorique dans le réservoir (2) à partir du débit massique instantané de l'air respectivement détecté, de la teneur en humidité instantanée de l'air respectivement détectée et du débit massique instantané de l'eau respectivement détecté, et
- on gère l'unité fonctionnelle en fonction du débit théorique modélisé respectif et/ou du gradient respectif du débit théorique modélisé.

2. Procédé conforme à la revendication 1,
**caractérisé en ce qu'**
en tant qu'unité fonctionnelle, on utilise l'unité de climatisation (5) qui est activée en fonction du niveau théorique modélisé respectif et/ou du gradient respectif du niveau théorique modélisé.

3. Procédé conforme à la revendication 1 ou 2,
**caractérisé en ce qu'**
en tant qu'unité fonctionnelle on utilise le moteur à combustion interne (4), et on sélectionne un champ de caractéristiques utilisé pour gérer le moteur à combustion interne (4) en fonction du niveau théorique modélisé respectif et/ou du gradient respectif du niveau théorique modélisé parmi un ensemble de champs de caractéristiques.

4. Procédé conforme à l'une des revendications 1 à 3,
**caractérisé en ce qu'**
en tant qu'unité fonctionnelle on utilise le moteur à combustion interne (4), on limite le couple de rotation maximum du moteur à combustion interne (4) à une valeur limite du couple de rotation maximum prédéfinie, et on choisit la valeur limite du couple de rotation maximum prédéfinie en fonction du niveau théorique modélisé respectif et/ou du gradient respectif du niveau théorique modélisé parmi un ensemble de valeurs limites du couple de rotation maximum prédéfinies.

5. Procédé conforme à l'une des revendications 1 à 4,
**caractérisé en ce qu'**
en tant qu'unité fonctionnelle on utilise une unité d'affichage du véhicule (1) qui est commandée pour afficher un signal de remplissage relatif à un remplissage du réservoir (2) avec de l'eau en fonction du niveau théorique modélisé respectif et/ou du gradient respectif du niveau théorique modélisé.

6. Procédé conforme à la revendication 5,
**caractérisé en ce que**
l'unité d'affichage permettant d'afficher le signal de remplissage est commandée de sorte que l'affichage du signal de remplissage soit synchronisé avec un affichage d'un autre signal de remplissage relatif au remplissage du réservoir de carburant du véhicule (1) avec du carburant.

7. Procédé conforme à l'une des revendications 1 à 6,
**caractérisé en ce que**
l'on détecte la température d'au moins un composant du système de gaz d'échappement du véhicule (1), et en tant qu'unité fonctionnelle on utilise un dispositif d'alimentation permettant l'alimentation de l'eau se trouvant dans le réservoir (2) dans la chambre de combustion (3) et, on branche le dispositif d'alimentation ou on augmente la puissance de ce dispositif d'alimentation lorsque la température respectivement détectée du composant dépasse une valeur limite maximum de la température prédéfinie.

8. Système de gestion d'au moins une unité fonctionnelle d'un véhicule (1), ce véhicule comprenant au moins un réservoir (2) de stockage d'eau pouvant être transférée dans au moins une chambre de combustion (3) du moteur à combustion interne (4) en particulier du moteur à essence du véhicule (1), au moins une installation de climatisation (5) et au moins une conduite d'alimentation en fluide (6) reliant l'installation de climatisation (5) au réservoir (2) et par l'intermédiaire de laquelle l'eau condensée au niveau d'au moins un évaporateur (7) de l'installation de climatisation (5) peut être transféré dans le réservoir (2), comprenant :
- au moins un capteur de niveau (23) pouvant être monté sur le réservoir (2) permettant de détecter le niveau instantané dans le réservoir (2),
- au moins un capteur d'humidité (24) pouvant être monté dans l'installation de climatisation (5) et permettant de détecter la teneur en humidité instantanée de l'air frais circulant autour de l'évaporateur (7) qui contient en outre une proportion d'air de circulation, et
- au moins une unité de commande et/ou de régulation pouvant être reliée par la technique de communication avec l'unité fonctionnelle, le capteur de niveau (23) et le capteur d'humidité (24) et qui est réalisée pour :
- permettre de détecter si le niveau dans le réservoir (2) passe au-dessous d'une valeur limite minimum de niveau prédéfinie, et, lorsque le niveau dans le réservoir (2) passe en dessous de cette valeur limite minimum du niveau prédéfinie,
- déterminer le débit massique instantané de l'air frais circulant autour de l'évaporateur (7) à partir d'une commande respective de volets d'air de l'installation de climatisation (5),
- déterminer le débit massique instantané de l'air circulant autour de l'évaporateur (7) en utilisant le débit massique déterminé de l'air frais circulant autour de l'évaporateur (7),
- déterminer la teneur en humidité de l'air circulant autour de l'évaporateur (7) en utilisant la teneur en humidité détectée de l'air frais,
- déterminer le débit massique instantané de l'eau devant être transférée dans la chambre de combustion (3) à partir d'une commande ou d'une ouverture respectivement donnée de soupapes (32, 33) qui sont utilisées ou ouvertes pour transférer l'eau se trouvant dans le réservoir (2) vers la chambre de combustion (3), et de la pression de fluide respectivement détectée à la partie interne d'une conduite de fluide (30) utilisée pour transférer l'eau vers la chambre de combustion (3),
- modéliser, à partir du débit massique instantané de l'air respectivement déterminé, de la teneur en humidité instantanée de l'air respectivement déterminée et du débit massique instantané de l'eau respectivement déterminé, un niveau théorique dans le réservoir (2), et
- commander et/ou réguler la gestion de l'unité fonctionnelle en fonction du niveau théorique modélisé respectif et/ou du gradient du niveau théorique modélisé.

9. Système conforme à la revendication 8,
**caractérisé en ce que**
l'unité fonctionnelle est l'installation de climatisation (5) et l'unité de commande et/ou de régulation est réalisée pour permettre d'activer l'installation de climatisation (5) en fonction du niveau théorique modélisé respectif et/ou du gradient respectif du niveau théorique modélisé.

10. Système conforme à la revendication 8 ou 9,
**caractérisé en ce que**
l'unité fonctionnelle est le moteur à combustion interne (4) et l'unité de commande et/ou de régulation est réalisée pour permettre de sélectionner un champ de caractéristiques utilisé pour gérer le moteur à combustion interne (4) en fonction du niveau théorique modélisé respectif et/ou du gradient respectif du niveau théorique modélisé parmi un ensemble de champs de caractéristiques.

11. Système conforme à l'une des revendications 8 à 10,
**caractérisé en ce que**
l'unité fonctionnelle est le moteur à combustion interne (4) et l'unité de commande et/ou de régulation est réalisée pour permettre de limiter le couple de rotation maximum du moteur à combustion interne (4) à une valeur limite du couple de rotations maximum prédéfinie, et pour permettre de sélectionner la valeur limite du couple de rotations maximum prédéfinie en fonction du niveau théorique modélisé respectif et/ou du gradient respectif du niveau théorique modélisé parmi un ensemble de valeurs limites du couple de rotation maximum prédéfinies.

12. Système conforme à l'une des revendications 8 à 11,
**caractérisé en ce que**
l'unité fonctionnelle est une unité d'affichage du véhicule (1) et l'unité de commande et/ou de régulation est réalisée pour permettre de commander l'unité d'affichage pour afficher un signal de remplissage relatif au remplissage du réservoir (2) avec de l'eau en fonction du niveau théorique modélisé respectif et/ou du gradient respectif du niveau théorique modélisé.

13. Système conforme à la revendication 12,
**caractérisé en ce que**
l'unité de commande et/ou de régulation est réalisée pour permettre de commander l'unité d'affichage pour afficher le signal de remplissage de sorte que l'affichage du signal de remplissage soit synchronisé avec l'affichage d'un autre signal de remplissage relatif au remplissage du réservoir de carburant du véhicule (1) avec du carburant.

14. Système conforme à l'une des revendications 8 à 13,
**caractérisé par**
au moins une unité de capteurs pouvant être reliée par la technique de communication avec l'unité de commande et/ou de régulation, au moyen de laquelle peut être détectée la température d'au moins un composant du système de gaz d'échappement du véhicule (1), l'unité fonctionnelle étant un dispositif de transfert permettant de transférer l'eau se trouvant dans le réservoir (2) vers la chambre de combustion (3), l'unité de commande et/ou de régulation étant réalisée pour permettre de brancher le dispositif de transfert et/ou d'en augmenter la puissance lorsque la température du composant respectivement détectée au moyen de l'unité de capteurs dépasse une valeur limite maximum de la température prédéfinie.
